# EUROPEAN PATENT SPECIFICATION

(11) **EP 1 825 732 B1**
(45) Date of publication and mention of the grant of the patent: **15.05.2013**
(21) Application number: 05781493.1
(22) Date of filing: 30.08.2005
(51) Int. Cl.: A01B 71/08, A01B 33/02, A01B 33/08, A01B 33/10, A01D 34/58

(54) **CULTIVATOR**
KULTIVATOR
BINEUSE

(30) Priority: 09.12.2004 JP 2004356478; 09.08.2005 JP 2005231396
(43) Date of publication of application: 29.08.2007
(73) Proprietor: Yanmar Co., Ltd., Osaka-shi, Osaka 530-0013 (JP)
(72) Inventor: IIDA, Keisuke YANMAR AGRICULTURAL EQUIPMENT CO., LTD., Osaka-shi, Osaka 530-0013 (JP); HAYATA, Hiromitsu YANMAR AGRICULTURAL EQUIPMENT Co., LTD, Osaka-shi, Osaka 530-0013 (JP)
(74) Representative: Bertrand, Didier
(86) International application number: PCT/JP2005/015731
(87) International publication number: WO 2006/061928

(56) References cited:
- GB-A- 1 256 986
- JP-A- 11 168 901
- JP-A- 11 168 901
- JP-A- 57 099 104
- JP-U- 2 094 817
- JP-U- 7 036 611
- JP-U- 60 036 030
- JP-U- 60 036 030
- US-A- 1 782 636
- US-A1- 2003 201 107

## Description

### Technical Field

The present invention relates to an electrically-operated tiller.

### Background Art

Conventionally, as one mode of a walking-type tiller, there has been known a tiller having the following constitution. That is, a transmission case is supported on a rear portion of a body frame which extends longitudinally, and a traveling wheel is interlockingly connected to a lower portion of the transmission case. A rotary case extends frontwardly from an upper portion of the transmission case, a tilling shaft portion is interlockingly connected to a front portion of the rotary case, and the transmission case is interlockingly connected to an electrically-operated motor which is mounted on an upper portion of the body frame by way of a power transmission mechanism. Further, a handle rod extends upwardly and rearwardly from a rear end portion of the body frame (see patent document 1, for example).

Further, the electrically-operated motor which is a relatively heavy object and a battery which supplies electricity to the electrically-operated motor are mounted on the body frame and an auxiliary wheel is mounted on a front end portion of the body frame, and the electrically-operated motor and the battery are supported on the auxiliary wheel and the traveling wheel.

Further, a tilling shaft is mounted on the tilling shaft portion and a plurality of tilling tines is detachably mounted on flange-shaped tilling tine mounting members which are mounted on an outer peripheral surface of the tilling shaft in a projecting manner.

Still further, the tilling tines form distal end blade portions by bending distal end portions thereof in the axial direction of the tilling shaft which extends in the lateral direction. Here, the tilling tines which have distal end blade portions bent leftwardly have proximal end portions thereof mounted on a left-side surface of the tilling tine mounting member in an overlapped manner, while the tilling tines which have distal end blade portions bent rightwardly have proximal end portions thereof mounted on a right-side surface of the tilling tine mounting member in an overlapped manner.

Due to such a constitution, by driving the electrically-operated motor, the traveling wheel and the tilling shaft portion can be rotated, and an operator can grasp a distal end portion of the handle bar and can perform a tilling operation using the tilling tines which are mounted on the tilling shaft while walking.
Patent Document 1: Japanese patent Laid-open 2001-169602

However, in the above-mentioned tiller, the electrically-operated motor and the battery are mounted on the body frame and the electrically-operated motor and the battery are supported on the auxiliary wheel and the traveling wheel. Accordingly, although the tiller is of a walking type, there exist drawbacks that the tiller requires a large storing space and, further, the tiller cannot be easily carried.

Further, the plurality of tilling tines is individually mounted on tilling tine mounting members which are mounted on an outer peripheral surface of the tilling shaft in a projecting manner and hence, there exist drawbacks that the number of parts is increased and it takes time and efforts for an exchanging operation.

Further, the tilling tines have distal end portions thereof respectively mounted on the left-side surface and the right-side surface of the tilling tine mounting member in an overlapped manner and hence, there exists a drawback that a total thickness of three plates consisting of the tilling tine mounting member and the tilling tines which are arranged at left and right side portions of the tilling tine mounting member generates a rotational resistance in mud which leads to a loss of a rotational driving force.
Document US 2003/201107 shows a tiller with the features recited in the preamble of annexed claim 1.

### Disclosure of the Invention

(1) According to the present invention, a tiller is in accordance with annexed claim 1.
The rotary drive portion is arranged in the inside of the tilling shaft which is formed into the hollow shape and hence, it is possible to realize the miniaturization, the reduction of weight and the compactification of the tiller per se. Accordingly, the aesthetic appearance of the tiller can be enhanced and, at the same time, the storing space of the tiller can be largely reduced.

Here, the electrically-operated motor and the reduction gear mechanism which constitute the rotary drive portion are arranged in the inside of the tilling shaft and hence, it is possible to allow the tilling shaft to maintain a predetermined rotational torque whereby the tiller can ensure a favorable tilling function.

The mud-or-the-like intrusion preventing bodies are respectively mounted on the left and right end surface portions of the tilling shaft and hence, it is possible to surely prevent the mud or the like from intruding into the inside of the tilling shaft using the mud-or-the-like intrusion preventing bodies.

Accordingly, it is possible to surely prevent the occurrence of drawbacks such as a malfunction of the electrically-operated motor or the reduction gear mechanism which is arranged in the inside of the tilling shaft due to the intrusion of the mud or the like.

As a result, it is possible to ensure a favorable function of the electrically-operated motor or the reduction gear mechanism which is arranged in the inside of the tilling shaft and hence, it is possible to ensure the favorable tilling operation performance while realizing the miniaturization and the reduction of weight of the tiller.

(3) According to an advantageous aspect of the present invention, the reduction gear mechanism is constituted of a planetary gear mechanism.

In such a constitution, since the planetary gear mechanism is adopted as the reduction gear mechanism, it is possible to surely obtain a predetermined degree of a gear ratio and to allow the tilling shaft to generate a predetermined rotational torque. Also from this point view, the tiller can ensure the favorable tilling function.

(4) According to an advantageous aspect of the present invention, at least one support member mounted on the support portion is formed of a hollow pipe, and electricity is supplied to the electrically-operated motor through the inside of the support member.

In such a constitution, since the electricity is supplied to the electrically-operated motor through the inside of the support member which is formed of the hollow pipe, for example, an electric cord for supplying electricity is protected by the support member thus preventing the electric cord from being damaged due to a contact thereof with splashed soil or other objects.

(5) According to an advantageous aspect of the present invention, a plurality of tilling tines is mounted on an outer peripheral surface of the tilling shaft and, at the same time, at least two sheets of tilling tines which are positioned in the same circumferential direction are integrally formed with each other and are integrally mounted on the outer peripheral surface of the tilling shaft in a detachable manner.

In such a constitution, at least two sheets of the tilling tines are integrally formed with each other and are integrally mounted on the outer peripheral surface of the tilling shaft in a detachable manner and hence, it is possible to reduce the number of parts and, at the same time, it is possible to largely reduce time and efforts necessary for an exchanging operation of the tines.

(6) According to an advantageous aspect of the present invention, two tilling tines which are integrally formed with each other have respective distal end portions thereof bent in the axial direction of the tilling shaft so as to form distal-end blade portions and, at the same time, both distal-end blade portions are formed in a state that these distal-end blade portions are bent in the directions opposite to each other.

In such a constitution, the distal-end blade portions of two tilling tines which are integrally formed are formed in a state that these distal-end blade portions are bent in the directions opposite to each other. Accordingly, a plate thickness which generates the rotational resistance in the soil can be reduced to an amount corresponding to thickness of two plates, that is, the tilling tine mounting member and the tilling tine whereby a loss of the rotational drive force can be reduced corresponding to the reduced thickness.

### Brief Explanation of Drawings

Fig. 1 is an explanatory side view of a tiller according to the present invention in a use state;
Fig. 2 is an explanatory side view of the tiller;
Fig. 3 is a front view of the tiller;
Fig. 4 is a cross-sectional plan view of a support portion;
Fig. 5 is an explanatory back view of the support portion;
Fig. 6 is a cross-sectional front view of a tilling shaft portion;
Fig. 7 is an explanatory side view of the tilling shaft portion;
Fig. 8 is a cross-sectional front view of a mud-or-the-like intrusion preventing body not according to the invention;
Fig. 9 is a cross-sectional front view of a mud-or-the-like intrusion preventing body not according to the invention;
Fig. 10 is a cross-sectional front view of a mud-or-the-like intrusion preventing body according to the present invention;
Fig. 11 is an explanatory view of a tilling shaft portion of another embodiment;
Fig. 12 is an explanatory view of a tilling tine mounting structure of another embodiment;
Fig. 13 is an explanatory view of a tilling tine mounting structure of another embodiment;
Fig. 14 is an explanatory view of a tilling tine mounting structure of another embodiment;
Fig. 15 is an explanatory view of a mounting structure of a resistance rod of another embodiment;
Fig. 16 is an explanatory view of a mounting structure of a resistance rod of another embodiment.

### Best mode for carrying out the invention

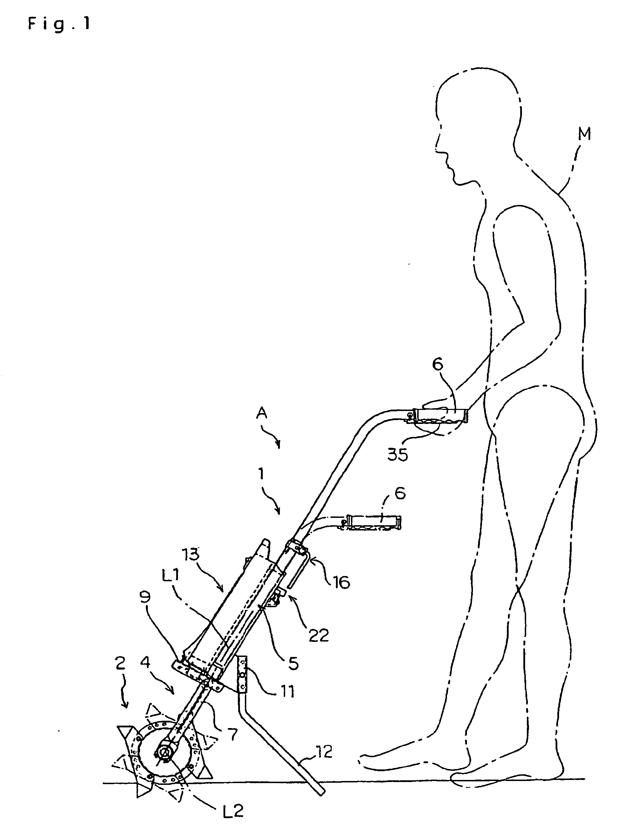

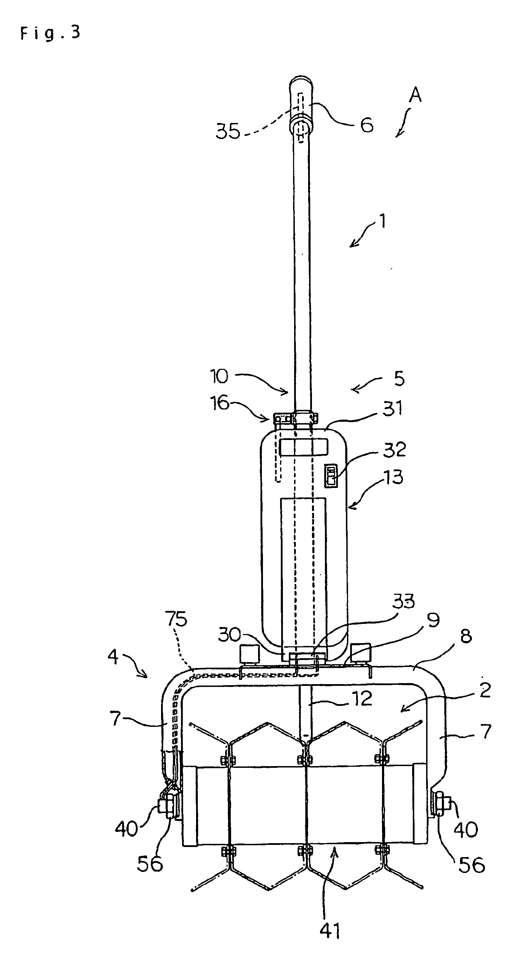

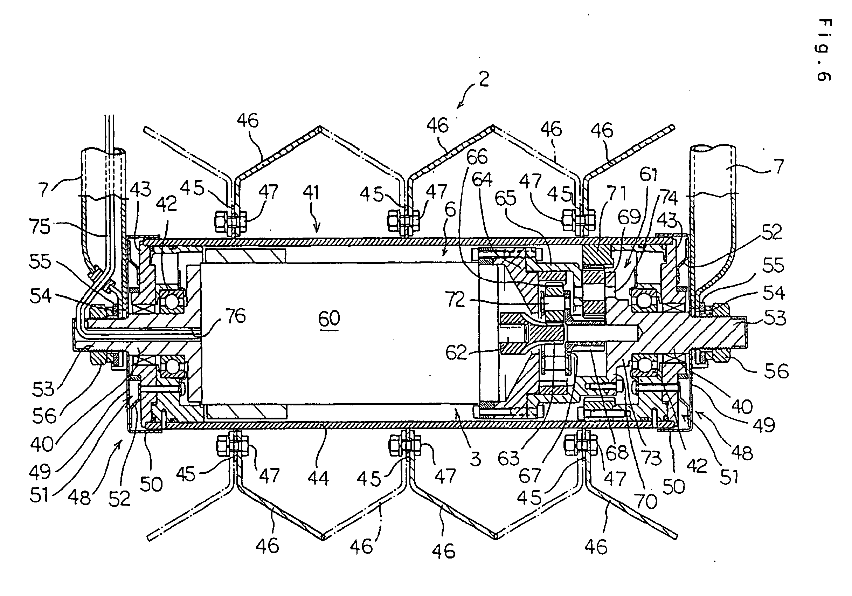

Symbol A shown in Fig. 1 to Fig. 3 indicates a tiller according to the present invention and the tiller A includes a support portion 1, a tilling shaft portion 2 which is rotatably supported on the support portion 1, and a rotary drive portion 3 (see Fig. 6) which is incorporated in the tilling shaft portion 2 and rotationally drives the tilling shaft portion 2. Symbol M indicates an operator.

Hereinafter, the structures of the support portion 1, the tilling shaft portion 2 and the rotary drive portion 3 are explained in detail.

### [Explanation of the support portion 1]

The support portion 1 includes, as shown in Fig. 1 to Fig. 3, a support-portion main body 4 which supports the tilling shaft portion 2, a support-portion intermediate body 5 which extends upwardly from the support-portion main body 4 and a grip body 6 which extends rearwardly from an upper end portion of the support-portion intermediate body 5, wherein the grip body 6 forms a handle.

Further, the support-portion main body 4 is constituted of a pair of left and right vertically extending members 7, 7 which constitute support members and a laterally extending member 8 which is extended between upper end portions of both vertically extending members 7, 7, and is formed into a gate shape as viewed in a front view. Here, these extending members 7, 7, 8 are respectively formed in a hollow-pipe shape.

Further, the support-portion intermediate body 5 includes a support base 9 which is fixedly mounted on the laterally extending member 8 of the support-portion main body 4, an intermediate main body 10 which has a lower end portion thereof fixedly mounted on the support base 9 and extends vertically and a resistance rod 12 which is mounted on a lower portion of the intermediate main body 10 by way of a mounting body 11.

The support base 9 supports a battery case 13 which incorporates a battery (not shown in the drawing) therein and the intermediate main body 10.

The intermediate main body 10 includes a hollow-pipe-like lower-half member 14 which extends vertically, a hollow-pipe-like upper-half member 15 which is detachably inserted into the hollow-pipe-like lower half member 14 and extends vertically and an adjusting member 16 which can adjust the extension and the contraction of both upper and lower half members 15, 14.

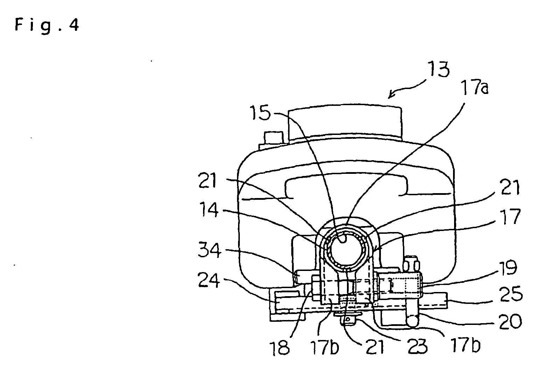

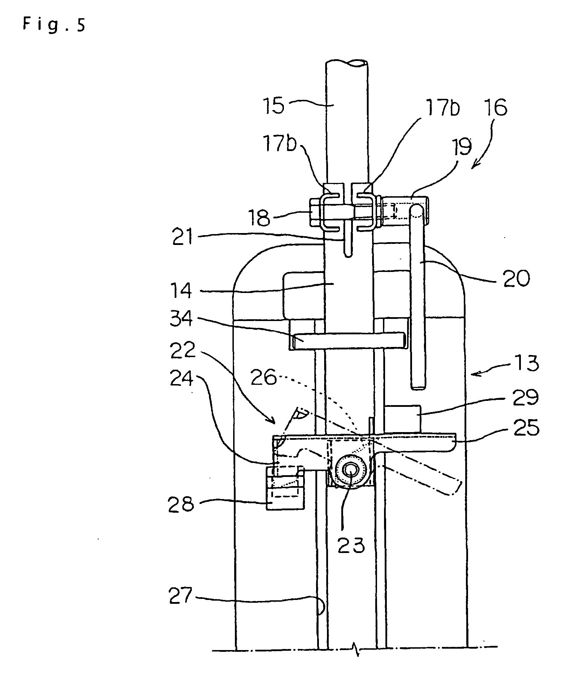

The adjusting member 16 is, as shown in Fig. 4 and Fig. 5, constituted as follows. A middle portion 17a of a clamping member 17 is formed in an arc shape along an outer peripheral surface of an upper portion of the lower half member 14. Left and right end portions 17b, 17b of the middle portion 17a are extended rearwardly and are arranged in parallel in the lateral direction such that the left and right end portions 17b, 17b are arranged to face each other in an opposed manner. A clamping bolt 18 which has an axis thereof directed in the lateral direction penetrates both left and right end portions 17b, 17b, a female-threadedmember 19 is threadedly engaged with a distal end portion of the clamping bolt 18 which penetrates outwardly from the right end portion 17b, and a rotary manipulation member 20 is mounted on the female thread member 19.

Here, in an upper portion of the lower-half member 14, a plurality of (three in this embodiment) longitudinal grooves 21, 21, 21 which extends vertically is formed in a circumferentially spaced-apart manner and hence, the upper portion of the lower half member 14 is formed in a radially extensible and shrinkable manner.

In such a constitution, by rotating the female threaded member 19 in the normal or the reverse direction by way of the rotary manipulation member 20, the left and right end portions 17b, 17b are made to approach to each other or are separated from each other by way of the clamping bolt 18 thus adjusting the expansion and shrinking of the upper portion of the lower half member 14.

Accordingly, when the extension and contraction of the upper half member 15 which is inserted in the lower half member 14 are adjusted, the diameter increasing adjustment of the lower half member 14 is performed by operating the rotary manipulation member 20 as described above, in such a state, the upper half member 15 is allowed to slide in the vertical direction when necessary and, thereafter, the diameter decreasing adjustment of the lower half member 14 is performed by operating the rotary manipulation member 20 thus fixing the upper half member 15.

Further, on a middle portion of the lower half member 14, a middle portion of a battery case locking body 22 which extends in the lateral direction is pivotally supported by way of a pivot pin 23 which has an axis thereof directed in the longitudinal direction, and a hook shape locking member 24 is formed on a left end portion of the battery case locking body 22. Further, an operating member 25 is formed on a right end portion of the battery case locking body 22.

In addition, a torque spring 26 is mounted on the pivot pin 23, and the torque spring 26 resiliently biases the battery case locking body 22 so as to rotate the battery case locking body 22 in the locking direction (in Fig. 5, counterclockwise rotation about the pivot pin 23) of a locking member 24. Numeral 34 indicates an upward movement restricting pin which restricts an upward movement of the battery case 13.

Here, on a rear surface center portion of the battery case 13, a recessed rib portion 27 which allows the lower half member 14 to be fitted therein is formed in a state that the recessed rib portion 27 extends in the vertical direction, and a pocket-like locking member receiving body 28 is mounted on a left-side portion of a rear surface while with respect to the recessed rib portion 27 while an operating member receiving body 29 is mounted on a right-side portion of the rear surface.

Further, an engaging member 30 is mounted on a lower end front center portion of the battery case 13 in a downwardly projecting manner, while a handle member 31 is mounted on an upper end portion of the battery case 13. Numeral 32 indicates a main switch which is mounted on the battery case 13.

In such a constitution, when the battery case 13 is mounted on the support base 9, the battery case 13 is placed on the support base 9, an engaging member 30 is engaged with an engaging receiving member 33 which is mounted on a front end portion of the support base 9 and, at the same time, the recessed rib portion 27 of the battery case 13 is fitted on the lower half member 14.

In such a state, as indicated by a chain line in Fig. 5, by pressing the operating member 25 of the battery case locking body 22 in the downward direction against the resilient biasing force which is biased from the torque spring 26, the locking member 24 of the battery case locking body 22 is lifted in the upward direction thus preventing the locking member receiving body 28 from interfering with the locking member 24.

Then, when the recessed rib portion 27 of the battery case 13 is fitted on the lower half member 14 and, thereafter, an operator removes his/her hands from the operating member 25, the battery case locking body 22 is rotated by the resilient biasing force of the torque spring 26 and hence, the locking member 24 is locked to the locking member receiving body 28 and, at the same time, the operating member 25 is brought into contact with the operating member receiving body 29 from below thus restricting the rotation of the battery case locking body 22.

As a result, the battery case 13 is locked to the locking member 24 by way of the locking member receiving body 28 and is fixed to the support base 9 and the lower half member 14. Accordingly, it is possible to easily mount the battery case 13 on the support base 9.

Further, in removing the battery case 13 from the support base 9, it is possible to easily remove the battery case 13 from the support base 9 by taking steps opposite to the above-mentioned steps.

The grip body 6 is contiguously mounted on an upper end portion of the upper half member 15. Below the grip body 6, and a hand switch 35 is arranged along the grip body 6. The hand switch 35 is turned on when the hand switch 35 is gripped together with the grip body 6 thus starting an operation of the rotary drive portion 3 described later. On the other hand, when the operator loosens his/her hand gripping of the grip body 6, the hand switch 35 is turned off thus stopping the operation of the rotary drive portion 3.

Here, the starting/stopping operation of the rotary drive portion 3 using the hand switch 35 is only possible when a main switch 32 which is mounted on the battery case 13 is turned on. That is, when the main switch 32 is turned off, even when the operator operates the hand switch 35, the rotary drive portion 3 is not started.

### [Explanation of the tilling shaft portion 2]

The tilling shaft portion 2 is, as shown in Fig. 1 to Fig. 3 and Fig. 6, constituted as follows. A pair of left and right rotary support shafts 40, 40 which has an axis thereof directed in the lateral direction is respectively mounted on lower end portions of the pair of left and right vertically extending members 7, 7 which is mounted on the above-mentioned support-portion main body 4, and a hollow tilling shaft 41 is rotatably extended between both rotary support shafts 40, 40.

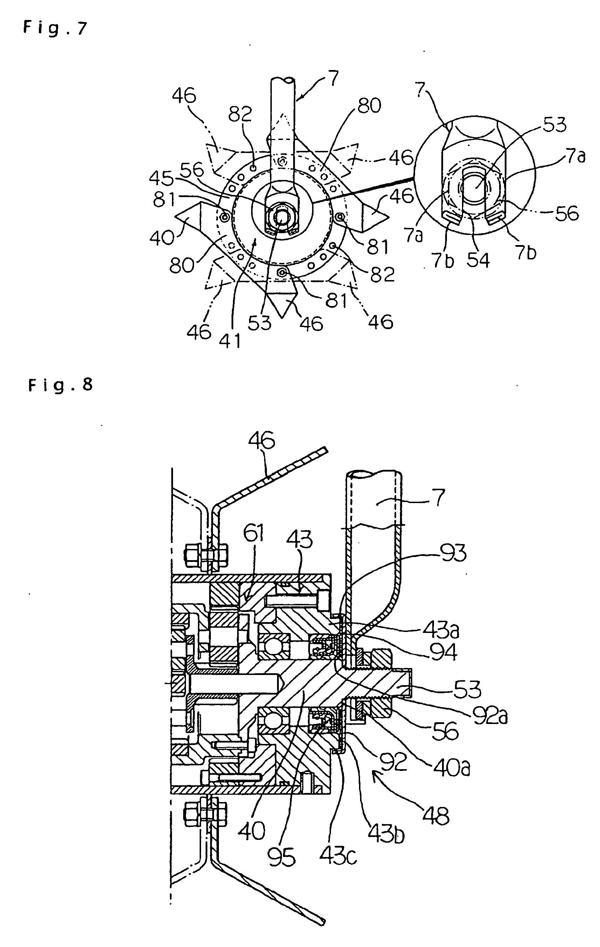

Here, as shown in Fig. 7, bifurcated members 7a, 7a are formed on lower end portions of the vertically extending members 7, 7 which are mounted on the support-portion main body 4. Between both bifurcated members 7a, 7a, engaging grooves 54, 54 for stopping the rotation which have lower ends thereof opened and extended in the vertical direction are formed, and lower end portions of the respective bifurcated members 7a, 7a are formed into receiving members 7b, 7b by being bent by substantially 90° in the outward direction.

Further, on outer end portions of the pair of left and right rotary support shafts 40, 40 which support the tilling shaft 41, as shown in Fig. 6, male threaded portions 53, 53 are formed. Here, each mall threaded portion 53 is, as also shown in an enlarged manner in Fig. 7, formed in an approximately oval shape by chamfering portions of left and right side surfaces of a circular cross section thereof as viewed in a side view.

In such a constitution, by engaging the respective male threaded portions 53, 53 with the engaging grooves 54, 54 for stopping the rotation which are mounted between the above-mentioned bifurcated members 7a, 7a, the rotation of the rotary support shafts 40, 40 is restricted and, at the same time, female threaded bodies 56, 56 are fastened and fixed to the male threaded portions 53, 53 by way of washers 55, 55 by threaded engagement.

In such a state, the respective male threaded portions 53, 53 are supported on the receiving members 7b, 7b which are formed by bending the lower end portions of the bifurcated members 7a, 7a by approximately 90° in the outward direction from below by way of the washers 55, 55 thus preventing the male threaded portions 53, 53 from being removed in the downward direction.

Accordingly, by mounting or dismounting the female threaded bodies 56, 56, the tilling shaft 41 can be mounted on or removed from the support-portion main body 4 easily by way of the rotary support shafts 40, 40.

Further, as shown in Fig. 1, an axis L2 of the above-mention rotary support shafts is arranged in the vicinity of an axis L1 of the intermediate main body 10 which extends in the vertical direction as viewed in a side view.

The tilling shaft 41 is constituted as follows. Ring-shaped end wall bodies 43, 43 are rotatably mounted on an outer peripheral surface of the rotary support shafts 40, 40 by way of bearings 42, 42. A cylindrical-shaped tilling shaft main body 44 is interposed between outer peripheral edge portions of the end wall bodies 43, 43 and is formed in a hollow shape. Further, a plurality (three in this embodiment) of tilling tine mounting members 45 is mounted on an outer peripheral surface of the tilling shaft main body 44 in a spaced-apart manner in the axial direction of the tilling shaft main body 44, wherein the tilling tine mounting members 45 have a flange shape and are mounted on the outer peripheral surface of the tilling shaft main body 44 in a projecting manner. A plurality (four in this embodiment) of a tilling tines 46 is mounted on the respective tilling tine mounting members 45 in the same circumferentially spaced-apart manner. Numeral 47 indicates tilling tine mounting bolts.

Here, as shown in Fig. 7, at least two sheets (two in this embodiment) of the tilling tines 46, 46 which are positioned in the same circumferential direction are integrally formed with each other and are integrally mounted on the outer peripheral surface of the tilling shaft 41 in a detachable manner.

That is, two sheets of the tilling tines 46, 46 are integrally formed on both end portions of an integrally connecting body 80, and the integrally connecting body 80 is brought into contact with a left surface or a right surface of the tilling tine mounting members 45 in an overlapped manner and, at the same time, is detachably mounted on the tilling tine mounting members 45 using mounting bolts 81. Numeral 82 indicates bolt insertion holes which are formed in the tilling tine mounting members 45.

Further, on one surface (for example, left surface) of the tilling tine mounting members 45, two pairs of tilling tine mounting members 45, 45 are mounted at positions which are arranged in a point symmetry about an axis of the tilling shaft 41, while the tilling tine 46 which is mounted on one tilling tine mounting member 45 and the tilling tine 46 which is mounted on another tilling tine mounting member 45 are arranged in a point symmetry about the axis of the tilling shaft 41.

Further, also on another surface (for example, right surface) of the tilling tine mounting members 45, two pairs of tilling tine mounting members 45, 45 are mounted at positions which are arranged in a point symmetry about an axis of the tilling shaft 41, while the tilling tine 46 which is mounted on one tilling tine mounting member 45 and the tilling tine 46 which is mounted on another tilling tine mounting member 45 are arranged at positions which are arranged in point symmetry about the axis of the tilling shaft 41, and these tilling tines 46 are arranged at a position where these tilling tines 46 are rotated by an angle of 45° about the axis of the tilling shaft 41 with respect to the above-mentioned tilling tines 46 which are mounted on the left surface of the tilling tine mounting member 45 as viewed in a side view.

Due to such a constitution, it is possible to continuously till a rice paddy using eight tilling tines 46 which are mounted on one tilling tine mounting member 45.

Here, two tilling tines 46, 46 are integrally formed by way of the integrally connecting body 80 and are detachably mounted on the tilling tine mounting member 45 which is integrally mounted on an outer peripheral surface of the tilling shaft 41 in a projecting manner and hence, it is possible to reduce the number of parts. It is also possible to largely reduce time and efforts for exchanging the tilling tines 46.

Further, it is possible to prevent e mud or the like from intruding into the inside of the tilling shaft 41 by mounting mud-or-the-like intrusion preventing bodies 48, 48 on the respective rotary support shafts 40, 40.

That is, the mud-or-the-like intrusion preventing body 48 is constituted of a ring-shaped end wall body covering member 49 which is mounted on the outer peripheral surface of the rotary support shaft 40 and covers an end surface of an end wall body 43 from outside, a cylindrical rotary shaft main body covering member 50 which extends toward the tilling shaft main body 44 side from a peripheral portion of the end wall body covering member 49 and covers an outer periphery of the outer peripheral surface of the tilling shaft main body 44 in an overlapped manner, and a ring-plate shape blocking member 52 which is mounted on the end wall body covering member 49 and blocks and partitions a space 51 which is formed between the end wall body covering member 49 and the end wall body 43 into an inner side and an outer side in the rotational axis direction.

Further, an inner peripheral portion 49a of the ring shape end wall body covering member 49 is fitted on a proximal outer peripheral surface of a male threaded portion 53 which is formed on an outer end portion of the rotary support shaft 40 as a stepped small diameter portion and, at the same time, an inner surface of the inner peripheral portion 49a of the end-wall-body covering member 49 is brought into pressure contact with the end surface 40a of the rotary support shaft 40 and hence, it is possible to prevent the mud or the like from intruding by way of the inner surface of the inner peripheral portion 49a of the end-wall-body covering member 49.

Due to such a constitution, even when the mud or the like intrudes into the inside of the space 51 from a gap between the inner peripheral surface of the rotary shaft main body covering member 50 and the outer peripheral surface of the tilling shaft main body 44, the space 51 is blocked or portioned into the inner side and outer side by the blocking member 52 in the redial direction from the rotary axis and hence, it is possible to surely prevent the mud or the like from intruding into the inner side of the space 51 from the outer side of the space 51.

As a result, it is possible to surely prevent the intruded mud or the like from coming to the outer peripheral surface of the rotary support shaft 40 and hence, it is possible to prevent the occurrence of the drawback that the rotary drive portion 3 is damaged by the intrusion of the mud or the like into the inside of the rotary drive portion 3.

### [Explanation of the rotary drive portion 3]

The rotary drive portion 3 is, as shown in Fig. 6 which is a front view, constituted such that an electrically-operated motor 60 and a reduction gear mechanism 61 are arranged in the inside of the tilling shaft 41 which is formed in a hollow shape. Here, the electrically-operated motor 60 has a left endportion thereof contiguously mounted on the left-side rotary support shaft 40 in Fig. 6, has a drive shaft 62 projected in the rightward direction from a right end portion thereof, and interlockingly connects the drive shaft 62 and the tilling shaft main body 44 to each other by way of the reduction gear mechanism 61.

In such a constitution, since the rotary drive portion 3 is arranged in the inside of the tilling shaft 41 which is formed in a hollow shape, it is possible to realize the miniaturization, the reduction of a weight and the compactification of the tiller A per se. Accordingly, the aesthetic appearance of the tiller can be enhanced and, at the same time, a space necessary for the tiller A can be largely reduced.

Here, the electrically-operated motor 60 and the reduction gear mechanism 61 which constitute the rotary drive portion 3 are arranged in the inside of the tilling shaft 41 and hence, it is possible to allow the tilling shaft 41 to possess a predetermined rotational torque thus ensuring the favorable tilling function.

The reduction gear mechanism 61 is constituted of a planetary gear mechanism which performs a two-stage speed reduction, wherein a first sun gear 63 is coaxially mounted on a drive shaft 62, a first inner gear 64 is arranged along an outer periphery of the first sun gear 63 by way of a gear support body 65 while being supported on the electrically-operated motor 60, a plurality of first primary gears 66 is arranged between the first inner gear 64 and the first sun gear 63 in a meshed state and these first primary gears 66 are integrally connected with each other using a carrier 67.

Further, a second sun gear 68 is mounted on the carrier 67, a plurality of second primary gears 69 is meshed with the second sun gear 68 and, at the same time, the respective second primary gears 69 are rotatably mounted between the gear support body 65 and a flange-shaped gear support member 70 which is formed on the right rotary support shaft 40, a second inner gear 71 is meshed with the outer peripheries of these second primary gears 69 and, at the same time, an outer peripheral surface of the second inner gear 71 is fixedly mounted on an inner peripheral surface of the tilling shaft main body 44. Numeral 72 indicates a first primary gear support shaft, numeral 73 indicates a second sun gear support shaft and numeral 74 indicates a second primary gear support shaft.

Here, the drive shaft 62, the first sun gear 63, the second sun gear 68 and the second sun gear support shaft 73 are arranged coaxially.

In this manner, the planetary gear mechanism is adopted as the reduction gear mechanism and hence, it is possible to surely obtain a predetermined magnitude of a gear ratio thus allowing the tilling shaft 41 to generate a predetermined rotational torque. Also from this viewpoint, the tiller can ensure the great tilling function.

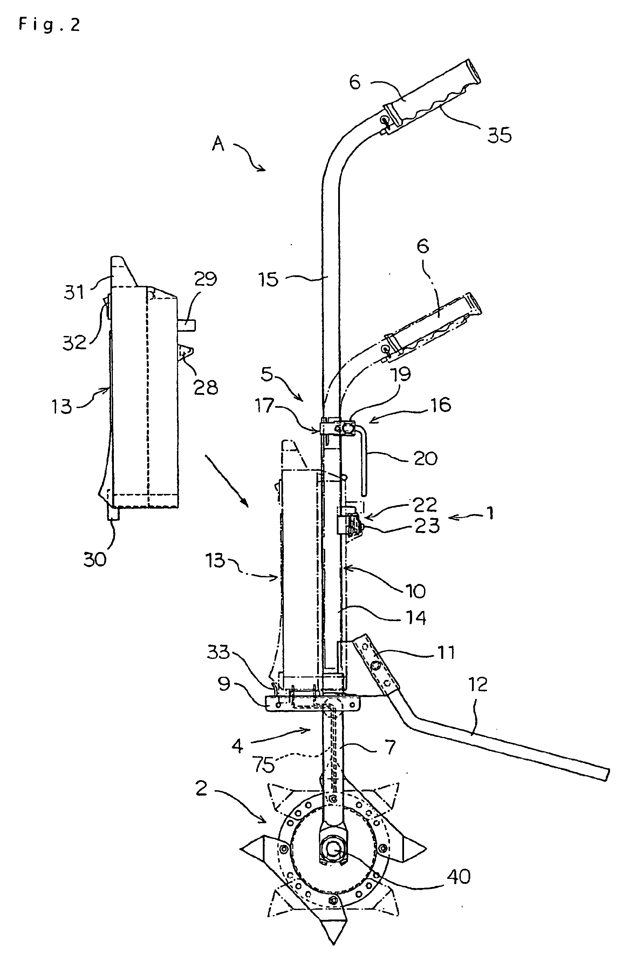

Further, an electric cord 75 which connects the electrically-operated motor 60 to the battery is, as shown in Fig. 2, Fig, 3 and Fig. 6, wired such that the electric cord 75 passes through the hollow-pipe-shaped support-portion main body 4 used as a support member and a cord insertion hole 76 which is formed at a center portion of the left rotary support shaft 40 in Fig. 6.

Due to such a constitution, since the electricity is supplied to the electrically-operated motor 60 through the support-portion main body 4 which is formed in a hollow pipe shape, for example, the electric cord 75 for supplying electricity is protected by the support-portion main body 4 and hence, it is possible to prevent the electric cord 75 from being damaged by a contact with a scattered mud or other materials.

Next, another embodiment of the constitutional members of the tiller A which is constituted as described above is explained in conjunction with the drawings.

That is, Fig. 8 to Fig. 10 show another embodiment (first embodiment to third embodiment) of the mud-or-the-like intrusion preventing body 48. Here, the mud-or-the-like intrusion preventing body 48 according to the first embodiment shown in Fig. 8 is formed of a ring-shaped end surface covering member 92 which covers an end surface 43b of a stepped small diameter portion 43a which is formed on the end surface of the end wall body 43 from outside, and a cylindrical peripheral portion covering member 93 which extends toward the stepped small diameter portion 43a side from the outer peripheral portion of the end surface covering member 92 and covers the outer periphery of the outer peripheral surface 43c of the stepped small diameter portion 43a in an overlapped manner. Here, the mud-or-the-like intrusion preventing body 48 is formed into a cap shape and hence, it is possible to allow the mud-or-the-like intrusion preventing body 48 to fit on the stepped small diameter portion 43a from the outside.

Further, in fitting the mud-or-the-like intrusion preventing body 48 on the stepped small diameter portion 43a, a mud-or-the-like intrusion preventing washer 94 which is made of a synthetic resin or the like is interposed between the end surface covering member 92 of the mud-or-the-like intrusion preventing body 48 and the end surface 43b of the stepped small diameter portion 43a. Numeral 95 indicates a packing which is fitted in an outside inner peripheral portion of the end wall body 43.

Further, an inner peripheral portion 92a of the ring-shaped end surface covering member 92 is fitted in a distal end outer peripheral surface of the mail threaded portion 53 which is formed on the outer end portion of the rotary support shaft 40 as a stepped small diameter portion and, at the same time, an inner surface of the inner peripheral portion 92a of the end surface covering member 92 is brought into pressure contact with the end surface 40a of the rotary support shaft 40 and hence, it is possible to prevent the mud and soil from intruding by way of the inner surface of the inner peripheral portion 92a of the end surface covering member 92.

In such a constitution, the mud-or-the-like intrusion preventing body 48 is fitted on the stepped small diameter portion 43a by way of the mud-or-the-like intrusion preventing washer 94. In such a state, by engaging a lower end portion of the vertically extending member 7 with the mail threaded portion 53 of the rotary support shaft 40 and, at the same time, by fastening the female threaded body 56 to the mail threaded portion 53, the end surface covering member 92 can be mounted on the end surface 43b of the stepped small diameter portion 43a by way of the mud-or-the-like intrusion preventing washer 94 in a state that the end surface covering member 92 is brought into pressure contact with the end surface 43b in a face contact.

As a result, it is possible to surely prevent the mud or the like from intruding from a gap between the end surface 43b of the stepped small diameter portion 43a and the end surface covering member 92 of the mud-or-the-like intrusion preventing body 48.

Here, the peripheral portion covering member 93 is formed to have an inner diameter which allows an inner peripheral surface thereof to be in close contact with the outer peripheral surface 43c of the stepped small diameter portion 43a and hence, it is possible to fit the peripheral portion covering member 93 on the stepped small diameter portion 43a by press-fitting whereby the close contact between the peripheral portion covering member 93 and the stepped small diameter portion 43a is favorably ensured thus enhancing the mud-or-the-like intrusion preventing effect.

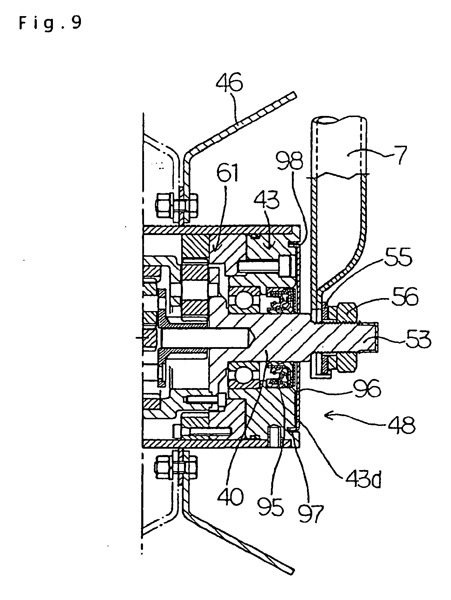

The mud-or-the-like intrusion preventing body 48 according to the second embodiment shown in Fig. 9 has a basic structure equal to a basic structure of the mud-or-the-like intrusion preventing body 48 described in the first embodiment. However, in this embodiment, the mud-or-the-like intrusion preventing body 48 is formed of a ring-shaped end surface covering member 96 which covers an end surface 43d of the end wall body 43 from the outside, a cylindrical fitting member 97 which extends toward the end surface 43d side of the end wall body 43 from an outer peripheral portion of the end surface covering member 96 and is fitted in a ring-shaped groove portion 98 which is formed on the end surface 43d. Here, the mud-or-the-like intrusion preventing body 48 is formed into a cap shape and hence, it is possible to mount the mud-or-the-like intrusion preventing body 48 on the end surface 43d of the end wall body 43 in a state that the mud-or-the-like intrusion preventing body 48 is brought into contact with the end surface 43d from the outside.

Here, the fitting member 97 is press-fitted into the groove portion 98 and hence, it is possible to allow the end surface covering member 96 to be in close contact with the end surface 43d of the end wall body 43 by way of the mud-or-the-like intrusion preventing washer 94.

In such a constitution, it is possible to surely prevent the mud or the like from intruding through a gap between the end surface 43d of the end wall body 43 and the fitting member 97 of the mud-or-the-like intrusion preventing body 48 as well as through a gap between the end surface 43d of the end wall body 43 and the end surface covering member 96.

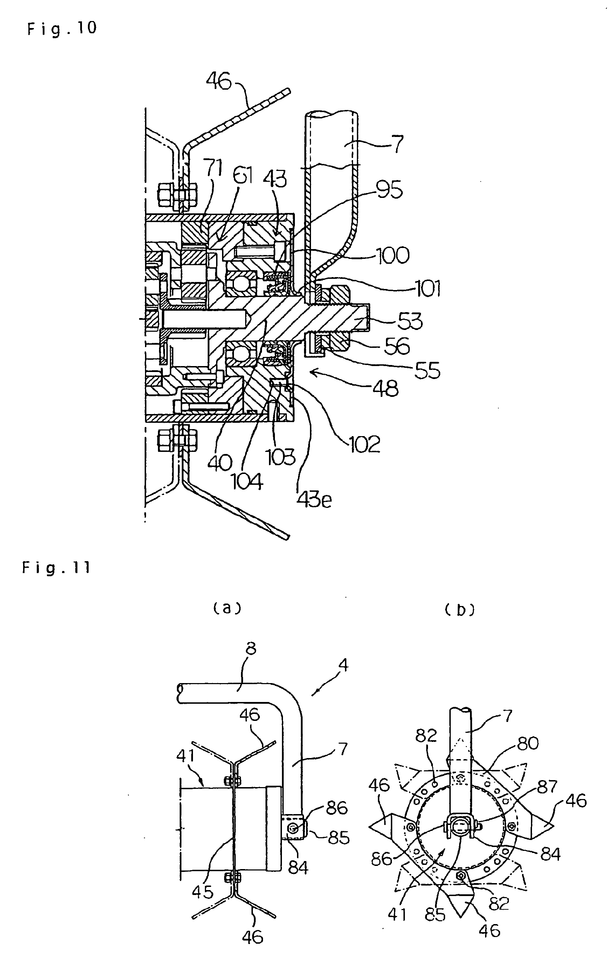

The mud-or-the-like intrusion preventing body 48 according to the third embodiment shown in Fig. 10 has a basic structure equal to a basic structure of the mud-or-the-like intrusion preventing body 48 of the first embodiment. However, the mud-or-the-like intrusion preventing body 48 is formed of a ring-shaped end surface covering member 100 which covers a stepped recessed fitting portion 43e from the outside in a state that the end surface covering member 100 is fitted in the stepped recessed fitting portion 43e which is formed on the end surface 43d of the end wall body 43, and a slide contact member 101 which extends along the peripheral surface of the rotary support shaft 40 from an inner peripheral portion of the end surface covering member 100. Here, the end surface covering member 100 is fitted in and brought into contact with the stepped recessed fitting portion 43e from the outside and, at the same time, the mud-or-the-like intrusion preventing body 48 can be fixed to the end wall body 43 using a small bolt 103 passing through a bolt insertion hole 102 which is formed in the end surface covering member 100. Numeral 104 indicates a bolt threading hole which is formed on the end wall body 43.

In such a constitution, the end surface coveringmember 100 is fitted in and brought into contact with the stepped recessed fitting portion 43e from the outside and, at the same time, the bolt insertion hole 102 is aligned with the bolt threading hole 104, and the small bolt 103 is threadedly engaged with these bolt insertion hole 102 and bolt threading hole 104 and hence, it is possible to allow the end surface covering member 100 to be in close contact with the stepped recessed fitting portion 43e in a pressed state.

As a result, it is possible to surely prevent the mud or the like from intruding from a gap between the stepped recessed fitting portion 43e and the end surface covering member 100.

In such a state, the slide contact member 101 is rotatably brought into slide-contact with the outer peripheral surface of the rotary support shaft 40 and hence, it is possible to prevent the mud or the like from intruding from a gap between the outer peripheral surface of the rotary support shaft 40 and an inner peripheral surface of the slide contact member 101.

Fig. 11 shows another embodiment of the connection structure between lower end portions of the pair of left and right vertically extending members 7, 7 which are mounted on the support-portion main body 4 and a pair of left and right rotary support shafts 40, 40 in which the tilling shaft 41 is rotatably extended therebetween, wherein Fig. 11(a) is a front view and Fig. 11(b) is a side view.

That is, a fitting member 84 which has a gate shape as viewed in a side view is mounted on the lower end portion of the vertically extending member 7, the fitting member 84 is fitted on a fitted member 85 which is formed on an outer end portion of the rotary support shaft 40 from above and, in such a state, a connection pin 86 which has an axis thereof directed in the traveling direction of the tiller penetrates and connects the fitting member 84 and the fitted member 85 in a traversing manner. Numeral 87 indicates a removal protecting pin.

By inserting or removing the connection pin 86 in this manner, it is possible to easily mount and remove the rotary support shaft 40 to the vertically extending member 7 of the support portion main body 4 and, at the same time, it is also possible to connect the rotary support shaft 40 to the vertically extending member 7 in a state that the rotation of the rotary support shaft 40 is stopped.

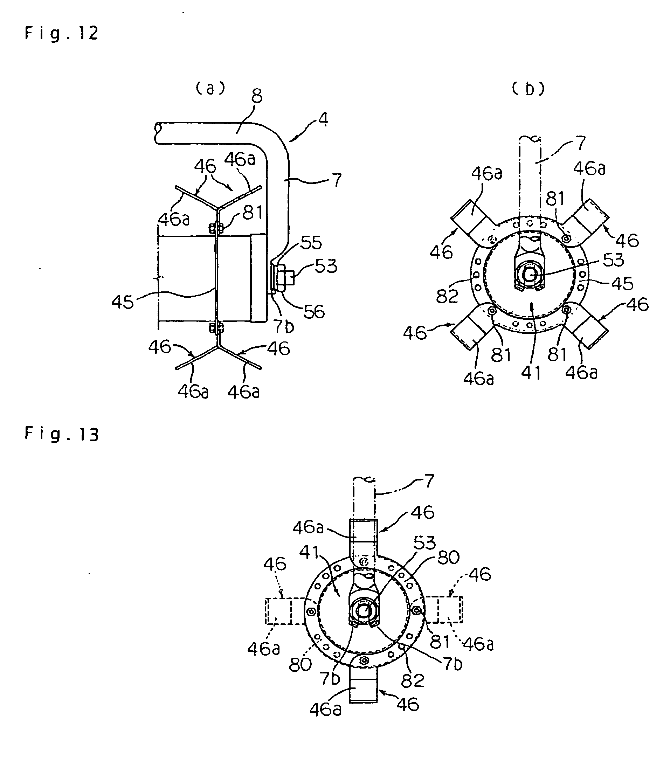

Fig. 12 shows another embodiment of the tilling tine 46, wherein Fig. 12(a) is a front view, and Fig. 12(b) is a side view.

That is, the tilling tines 46, 46 of this embodiment are respectively integrally formed on both end portions of the integrally connecting body 80, the respective tilling tines 46, 46 have the distal end portions thereof bent in the axial direction of the tilling shaft 41 which extends in the lateral direction to form distal-end blade portions 46a, 46a and, at the same time, both distal-end blade portions 46a, 46a are formed in a state that the distal-end blade portions 46a, 46a are bent in the directions opposite to each other.

In such a constitution, the distal-end blade portions 46a, 46a of two tilling tines 46, 46 which are integrally formed are formed in a state that these distal-end blade portions 46a, 46a, are bent in the directions opposite to each other. Accordingly, a plate thickness which generates the rotational resistance in the soil can be reduced to an amount corresponding to thickness of two plates, that is, the tilling tine mounting member 45 and the integrally connecting body 80 which integrally supports the tilling tines 46, 46 whereby a loss of the rotational drive force can be reduced corresponding to the reduced thickness.

Fig. 13 shows still another embodiment of the tilling tine 46, wherein the integrally connecting body 80 is formed into an semicircular shape, the tilling tines 46, 46 which are integrally formed on both end portions of the integrally connecting body 80 are arranged at positions which are arranged in a point symmetry about an axis of the tilling shaft 41.

Further, the distal-end blade portions 46a, 46a of two tilling tines 46, 46 are formed in a state that the distal-end blade portions 46a, 46a are bent in the same direction.

In such a constitution, it is possible to integrally mount two tilling tines 46, 46 on one-side surface of the tilling tine mounting member 45 by way of the integrally connecting body 80 and, at the same time, it is possible to integrally mount two tilling tines 46, 46 on another-side surface of the tilling tine mounting member 45 by way of another integrally connecting body 80.

In such a state, since two integrally connecting bodies 80, 80 are mounted in a state that two integrally connecting bodies 80, 80 are shifted by rotation by an angle of 90° about the axis of the tilling shaft 41, it is possible to arrange four tilling tines 46, 46, 46, 46 in a state that the respective tilling tines 46, 46, 46, 46 are shifted by rotation with each other by an angle of 45° about the axis of the tilling shaft 41.

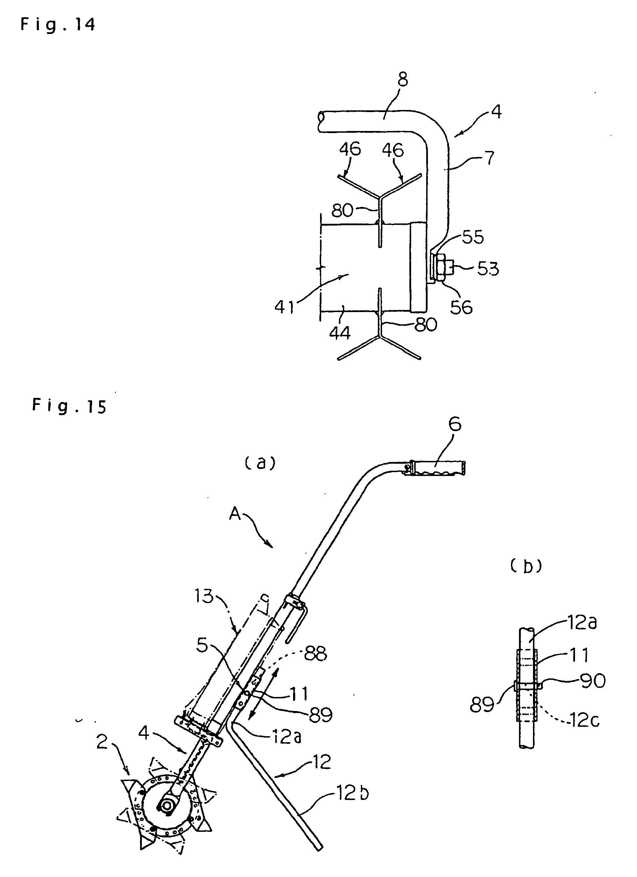

Fig. 14 shows still further another embodiment of the tilling tine 46. In this embodiment, the integrally connecting body 80 which integrally mounts two tilling tines 46, 46 is fixed to an outer peripheral surface of the tilling shaft main body 44 of the tilling shaft 41 by welding.

In such a constitution, it is possible to reduce a plate thickness which generates the rotational resistance in the soil to an amount corresponding to thickness of only connecting body 80 and hence, a loss of the rotational drive force can be reduced corresponding to the reduced thickness.

Fig. 15 shows another embodiment of a mounting structure of the resistance rod 12 which is mounted on the support-portion intermediate body 5 by way of the mounting body 11, wherein Fig. 15(a) is an explanatory view of the side of the mounting structure, and Fig. 15 (b) is an explanatory view of a cross section of the mounting structure.

That is, the mounting body 11 is formed in a cylindrical shape in a vertically extending manner and is mounted along the support-portion intermediate main body 5. Further, a plurality of (three in this embodiment)pin insertion holes 88 which penetrate in the lateral direction is formed in the mounting body 11 at a fixed interval in the vertical direction.

Further, the resistance rod 12 is formed of a mounting member 12a which extends in the vertical direction along the support-portion intermediate main body 5 and a resistance-rod main member 12b which extends rearwardly and downwardly from a lower end portion of the mounting member 12a. Here, a plurality of (three in this embodiment) pin holes 12c which penetrates in the lateral direction is formed in the mounting member 12a at a fixed interval in the vertical direction.

Due to such a constitution, by inserting the mounting member 12a into the mounting body 11, by aligning any desired pin hole 12c which is formed in the mounting member 12a with the pin insertion hole 88 which is formed in the mounting body 11 and, in such a state, by allowing a fixing pin 89 which has an axis thereof directed in the lateral direction to penetrate the pin hole 12c and the pin insertion hole 88 in a traversing manner, it is possible to fix the mounting member 12a to the mounting body 11. Numeral 90 indicates a removal protective pin.

Further, by allowing the mounting member 12a to vertically slide in the inside of the mounting body 11 and by aligning the pin holes 12c with the pin insertion hole 88, it is possible to adjust a slide position of the mounting member 12a.

In this manner, a vertical position of the mounting resistance rod 12 can be adjusted along (parallel to) the support-portion intermediate main body 5 and hence, it is possible to arrange the resistance rod 12 at a position which conforms to a soil quality of a rice paddy thus efficiently performing the tilling operation while receiving proper resistance from the rice paddy by way of the resistance rod 12.

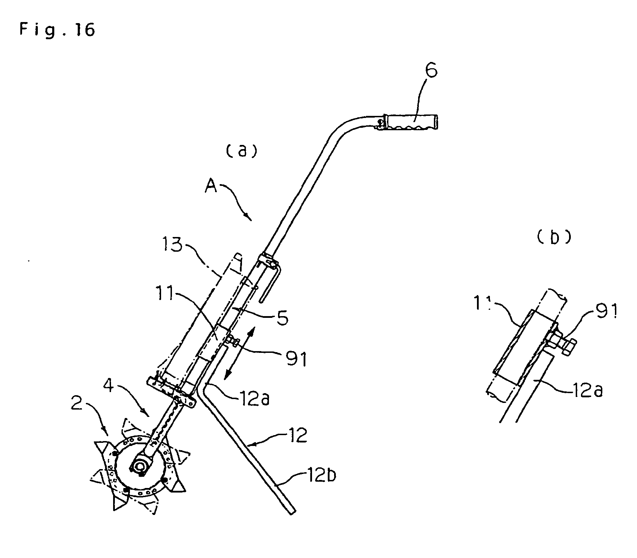

Fig. 16 shows a further another embodiment of the mounting structure of the resistance rod 12 which is mounted on the support-portion intermediate main body 5 by way of the mounting body 11, wherein Fig. 16(a) is a side surface explanatory view, and Fig, 16(b) is a cross-sectional explanatory view of the mounting structure.

That is, the mounting structure of this embodiment has the basic structure equal to the basic structure of the above-mentioned mounting structure which is explained in conjunction with Fig. 15. However, in this embodiment, the mounting body 11 which is formed in a cylindrical shape is fitted in the support-portion intermediate main body 5 in a vertically-slidable manner and, at the same time, a fastening bolt 91 is mounted on the mounting body 11 in an extensible and retractable manner in the direction orthogonal to an axis of the support-portion intermediate main body 5. Due to such a constitution, by fastening the fastening bolt 91, it is possible to fix the mounting body 11 on the support-portion intermediate main body 5 at an arbitrary vertical-slide-adjusting position by fastening.

Further, the mounting member 12a of the resistance rod 12 is fixed to a rear outer peripheral surface of the mounting body 11 by welding or the like.

In such a constitution, since the vertical position of the resistance rod 12 can be adjusted at an arbitrary position while arranging the resistance rod 12 along the support-portion intermediate main body 5, it is possible to accurately arrange the resistance rod 12 at a position which conforms to a soil quality of a rice paddy thus efficiently performing the tilling operation while receiving the proper resistance from the rice paddy by way of the resistance rod 12.

### Industrial Applicability

The structure of a tiller according to the present invention is effectively applicable to the structure which includes the support portion, the tilling shaft portion which is rotatably supported on the support portion and the rotary drive portion which rotatably drives the tilling shaft portion.

## Claims

1. A tiller comprising: a support portion (1); a tilling shaft portion (2) which is rotatably supported on the support portion (1) ; and a rotary drive portion (3) which rotatably drives the tilling shaft portion (2),
the tilling shaft portion 2) being configured such that a pair of left and right rotary support shafts (40) is respectively mounted on a pair of left and right support members (7) which is mounted on the support portion (1), a tilling shaft (41) which is formed of a hollow member is rotatably and laterally extended between both rotary support shafts (40) about an axis of the tilling shaft, and the rotary drive portion (3) is arranged in the inside of the tilling shaft (41),
the rotary drive portion (3) being configured such that an electrically-operated motor (60) is fixed to one rotary support shaft, a reduction gear mechanism (61) is interposed between the electrically-operated motor and another rotary support shaft, and the reduction gear mechanism (61) is interlockingly connected to the tilling shaft,
**characterized in that**:
mud-or-the-like intrusion preventing bodies (48) which prevent mud or the like from intruding into the inside of the tilling shaft (41) are mounted on left and right end surface portions of the tilling shaft (41) which is mounted on the pair of left and right support members by way of the rotary support shafts (40), and
a mud-or-the-like intrusion preventing body (48) is formed of a ring-shaped end surface covering member (100) which covers a stepped recessed fitting portion (43e) from the outside in a state that the end surface covering member (100) is fitted in the stepped recessed fitting portion (43e) which is formed on the end surface (43d) of the end wall body (43), and a slide contact member (101) which extends along the peripheral surface of the rotary support shaft (40) from an inner peripheral portion of the end surface covering member (100), and the end surface covering member (100) is fitted in and brought into contact with the stepped recessed fitting portion (43e) from the outside and the mud-or-the-like intrusion preventing body (48) is fixed to the end wall body (43).

2. A tiller according to claim 1, wherein the reduction gear mechanism is constituted of a planetary gear mechanism.

3. A tiller according to claim 1, wherein at least one support member mounted on the support portion is formed of a hollow pipe, and electricity is supplied to the electrically-operated motor through the inside of the support member.

4. A tiller according to claim 1, wherein a plurality of tilling tines is mounted on an outer peripheral surface of the tilling shaft and, at the same time, at least two tilling tines which are positioned in the same circumferential direction are integrally formed with each other and are integrally mounted on the outer peripheral surface of the tilling shaft in a detachable manner.

5. A tiller according to claim 4, wherein two tilling tines which are integrally formed with each other have respective distal end portions thereof bent in the axial direction of the tilling shaft so as to form distal-end blade portions and, at the same time, both distal-end blade portions are formed in a state that these distal-end blade portions are bent in the directions opposite to each other.

## Patentansprüche

1. Bodenfräse, die umfasst: einen Stützabschnitt (1); einen Frässchaftabschnitt (2), der auf dem Stützabschnitt (1) drehbar gelagert ist; und einen Drehantriebsabschnitt (3), der den Frässchaftabschnitt (2) rotatorisch antreibt,
wobei der Frässchaftabschnitt (2) so konfiguriert ist, dass ein Paar linker und rechter Drehstützschäfte (40) auf einem Paar linker bzw. rechter Stützelemente (7) montiert ist, die auf dem Stützabschnitt (1) montiert sind, ein Frässchaft (41), der aus einem hohlen Element gebildet ist, sich drehbar und seitlich zwischen beiden Drehstützschäften (40) um eine Achse des Frässchafts erstreckt und der Drehantriebsabschnitt (3) innerhalb des Frässchafts (41) angeordnet ist,
wobei der Drehantriebsabschnitt (3) so konfiguriert ist, dass ein elektrisch betriebener Motor (60) an einem Drehstützschaft befestigt ist, ein Untersetzungsgetriebemechanismus (61) zwischen dem elektrisch betriebenen Motor und einem weiteren Drehschützschaft eingeschoben ist, und der Untersetzungsgetriebemechanismus (61) verriegelnd mit dem Frässchaft verbunden ist,
**dadurch gekennzeichnet, dass**:
Körper (48) zum Verhindern des Eindringens von Schlamm oder Ähnlichem, die verhindern, dass Schlamm oder Ähnliches in das Innere des Frässchafts (41) eindringt, an den linken und rechten Oberflächenendabschnitten des Frässchafts (41) montiert sind, der an dem Paar linker und rechter Stützelemente mit Hilfe der Drehstützschäfte (40) montiert ist, und
ein Körper (48) zum Verhindern des Eindringens von Schlamm oder Ähnlichem aus einem ringförmigen, die Stirnfläche bedeckenden Element (100) gebildet ist, das einen gestuften, vertieften Anpassungsabschnitt (43e) in einem Zustand, in dem das die Stirnfläche bedeckende Element (100) in den gestuften vertieften Anpassungsabschnitt (43e) eingepasst ist, der auf der Stirnfläche (43d) des Stirnwandkörpers (43) gebildet ist, von der Außenseite bedeckt und ein Gleitkontaktelement (101), das sich längs der peripheren Oberfläche des Drehstützschafts (40) von einem inneren peripheren Abschnitt des die Stirnfläche bedeckenden Elements (100) erstreckt, bedeckt, und dass das die Stirnfläche bedeckende Element (100) von außen in den gestuften vertieften Anpassungsabschnitt (43e) eingepasst ist und damit in Kontakt gebracht ist und der Körper (48) zum Verhindern des Eindringens von Schlamm oder Ähnlichem an dem Stirnwandkörper (43) befestigt ist.

2. Bodenfräse nach Anspruch 1, wobei der Untersetzungsgetriebemechanismus aus einem Planetengetriebemechanismus gebildet ist.

3. Bodenfräse nach Anspruch 1, wobei wenigstens ein Stützelement, das auf den Stützabschnitt montiert ist, aus einem hohlen Rohr gebildet ist, und Elektrizität zu dem elektrisch betriebenen Motor durch das Innere des Stützelements zugeführt wird.

4. Bodenfräse nach Anspruch 1, wobei mehrere Frässpitzen an einer äußeren peripheren Fläche des Frässchafts montiert sind und gleichzeitig wenigstens zwei Frässpitzen, die in der gleichen Umfangsrichtung positioniert sind, einteilig miteinander gebildet sind und einteilig auf der äußeren peripheren Fläche des Frässchafts auf lösbare Weise montiert sind.

5. Bodenfräser nach Anspruch 4, wobei zwei Frässpitzen, die einteilig miteinander gebildet sind, jeweils entfernte Endabschnitte aufweisen, die in der axialen Richtung des Frässchafts gebogen sind, um Schneidenabschnitte am entfernten Ende zu bilden, und gleichzeitig beide Schneidenabschnitte am entfernten Ende in einem Zustand so gebildet sind, dass diese Schneidenabschnitte am entfernten Ende in zueinander entgegengesetzten Richtungen gebogen sind.

## Revendications

1. Motoculteur comprenant : une partie de support (1) ; une partie de barre de labourage (2) qui est supportée de manière à pouvoir tourner sur la partie de support (1) ; et une partie d'entraînement en rotation (3) qui entraîne en rotation la partie de barre de labourage (2),
la partie de barre de labourage (2) étant configurée de telle sorte qu'une paire d'axes de support tournants gauche et droit (40) est montée respectivement sur une paire d'éléments de support gauche et droit (7) qui est montée sur la partie de support (1), une barre de labourage (41) qui est formée d'un élément creux s'étend latéralement et de manière à pouvoir tourner entre les deux axes de support tournants (40) autour d'un axe de la barre de labourage, et la partie d'entraînement en rotation (3) est agencée à l'intérieur de la barre de labourage (41),
la partie d'entraînement en rotation (3) étant configurée de telle sorte qu'un moteur électrique (60) est fixé sur un premier axe de support tournant, un mécanisme de réduction à engrenage (61) est interposé entre le moteur électrique et un autre axe de support tournant, et le mécanisme de réduction à engrenage (61) est couplé de manière solidaire à la barre de labourage,
**caractérisé en ce que** :
des corps empêchant l'intrusion de boue ou analogue (48) qui empêchent la boue ou autre d'entrer dans la partie intérieure de la barre de labourage (41) sont montés sur des parties de surface d'extrémité gauche et droite de la barre de labourage (41) qui est montée sur la paire d'éléments de support gauche et droit aux moyens des axes de support tournants (40), et
un corps empêchant l'intrusion de boue et analogue (48) est formé d'un élément de revêtement de surface d'extrémité de forme annulaire (100) qui recouvre une partie d'assemblage en cavité étagée (43e) depuis l'extérieur dans un état tel que l'élément de revêtement de surface d'extrémité (100) est assemblé dans la partie d'assemblage en cavité étagée (43e) qui est formée sur la surface d'extrémité (43d) du corps de paroi d'extrémité (43), et un élément de contact coulissant (101) qui s'étend suivant la surface périphérique de l'axe de support tournant (40) à partir d'une partie périphérique interne de l'élément de revêtement de surface d'extrémité (100), et l'élément de revêtement de surface d'extrémité (100) est assemblé dans la partie d'assemblage en cavité étagée (43e) et amené en contact avec celle-ci depuis l'extérieur et le corps empêchant l'intrusion de boue et analogue (48) est fixé sur le corps de paroi d'extrémité (43).

2. Motoculteur selon la revendication 1, dans lequel le mécanisme de réduction à engrenage est constitué par un mécanisme de réduction planétaire.

3. Motoculteur selon la revendication 1, dans lequel au moins un élément de support monté sur la partie de support est formé d'une tuyauterie creuse, et de l'électricité est fournie au moteur électrique par l'intermédiaire de la partie intérieure de l'élément de support.

4. Motoculteur selon la revendication 1, dans lequel une pluralité de dents de labourage est montée sur une surface périphérique externe de la barre de labourage et, simultanément, au moins deux dents de labourage qui sont positionnées dans la même direction circonférentielle sont formées de manière unitaire l'une avec l'autre et sont montées de manière unitaire sur la surface périphérique externe de la barre de labourage d'une manière amovible.

5. Motoculteur selon la revendication 4, dans lequel deux dents de labourage qui sont formées de manière unitaire l'une avec l'autre comportent des parties d'extrémité distales respectives recourbées dans la direction axiale de la barre de labourage afin de former des parties de lame d'extrémité distale et, simultanément, les deux parties de lame d'extrémité distale sont formées dans un état tel que ces parties de lame d'extrémité distale sont recourbées dans des directions opposées l'une de l'autre.
